# FASCICULE DE BREVET EUROPEEN

(11) **EP 3 455 088 B1**
(45) Date de publication et mention de la délivrance du brevet: **28.10.2020**
(21) Numéro de dépôt: 17727287.9
(22) Date de dépôt: 10.05.2017
(51) Int. Cl.: B60C 9/00, B60C 9/20

(54) **PNEUMATIQUE À COUCHES DE TRAVAIL COMPRENANT DES MONOFILAMENTS POUR ÉVITER LA FISSURATION**
REIFEN MIT ARBEITSSCHICHTEN MIT MONOFILAMENTEN ZUM VERHINDERN VON RISSBILDUNG
TYRE COMPRISING WORKING LAYERS INCLUDING MONOFILAMENTS FOR PREVENTING CRACKING

(30) Priorité: 11.05.2016 FR 1654185
(43) Date de publication de la demande: 20.03.2019
(73) Titulaire: Compagnie Générale des Etablissements Michelin, 63000 Clermont-Ferrand (FR)
(72) Inventeur: MOREL-JEAN, Jacques, 63040 Clermont-ferrand Cedex 9 (FR); QUERAUD, Hervé, 63040 Clermont-ferrand Cedex 9 (FR); MUHLHOFF, Olivier, 63040 Clermont-ferrand Cedex 9 (FR); BRUANT, Rémi, 63040 Clermont-ferrand Cedex 9 (FR)
(74) Mandataire: Millanvois, Patrick Jacques Jean
(86) Numéro de dépôt international: PCT/FR2017/051109
(87) Numéro de publication internationale: WO 2017/194875

(56) Documents cités:
- WO-A1-2015/014574
- FR-A1- 2 784 614
- JP-A- H03 169 718
- JP-A- 2006 061 926
- US-A- 3 244 215

## Description

### DOMAINE DE L'INVENTION

La présente invention concerne un pneumatique.

Un pneumatique ayant une géométrie de révolution par rapport à un axe de rotation, la géométrie du pneumatique est généralement décrite dans un plan méridien contenant l'axe de rotation du pneumatique. Pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien.

Dans ce qui suit, les expressions « radialement intérieur à» et « radialement extérieur à» signifient respectivement « plus proche de l'axe de rotation du pneumatique, selon la direction radiale, que » et « plus éloigné de l'axe de rotation du pneumatique, selon la direction radiale, que ». Les expressions « axialement intérieur à» et « axialement extérieur à» signifient respectivement « plus proche du plan équatorial, selon la direction axiale, que » et « plus éloigné du plan équatorial, selon la direction axiale, que ». Une « distance radiale » est une distance par rapport à l'axe de rotation du pneumatique, et une « distance axiale » est une distance par rapport au plan équatorial du pneumatique. Une « épaisseur radiale » est mesurée selon la direction radiale, et une « largeur axiale » est mesurée selon la direction axiale.

Un pneumatique comprend un sommet comprenant une bande roulement destinée à venir en contact avec le sol par l'intermédiaire d'une surface de roulement, deux bourrelets destinés à venir en contact avec une jante et deux flancs reliant le sommet aux bourrelets. En outre, un pneumatique comprend une armature de carcasse comprenant au moins une couche de carcasse, radialement intérieure au sommet et reliant les deux bourrelets.

Le sommet comprend au moins une armature de sommet radialement intérieure à la bande de roulement. -'armature de sommet comprend au moins une armature de travail comprenant au moins une couche de travail composée d'éléments de renforcement parallèles entre eux formant, avec la direction circonférentielle, un angle compris entre 15° et 50°. L'armature de sommet peut également comprendre une armature de frettage comprenant au moins une couche de frettage composée d'éléments de renforcement formant, avec la direction circonférentielle, un angle compris entre 0° et 10°, l'armature de frettage étant le plus souvent mais pas obligatoirement radialement extérieure aux couches de travail.

### ETAT DE LA TECHNIQUE

Dans le contexte actuel de développement durable, l'économie de ressources et donc de matières premières est un des objectifs majeurs des industriels. Pour les pneumatiques, une des voies de recherche pour cet objectif, consiste à remplacer les câbles métalliques habituellement utilisés comme éléments de renforcement de différentes couches de l'armature de sommet par des fils unitaires ou monofilaments tels que décrits dans les documents EP 0043563**,** WO2015/014574A1**,** dans lequel ce type d'éléments de renforcement est utilisé dans un double objectif de gain de masse et de résistance au roulement.

Ces monofilaments sont essentiellement des cylindres de section S, de plus petite dimension d, généralement circulaire mais possiblement ovoïde dont les extrémités sont des surfaces dont la forme dépend des moyens de coupe.

Cependant l'utilisation de ce type d'éléments de renforcement présente l'inconvénient d'entraîner la création de fissures en extrémités des fils unitaires. En effet, les fils unitaires remplacent des assemblages de plusieurs fils unitaires dont la rigidité en traction est plus élevée et la rigidité en compression plus faible. De ce fait la pression de poinçonnement de l'extrémité d'un monofilament augmente et tend à créer des fissures qui finissent par se rejoindre, et pouvant amener à une défaillance du pneumatique. Une solution consiste à poser les monofilaments par bandes de façon à positionner les extrémités des monofilaments sur différents plans perpendiculaires à l'axe de rotation comme le mentionne le document JP 2011168254**.** Mais cette méthode nécessite une pose par bande très contraignante d'un point de vue industrielle et pose des problèmes d'endurance. En effet, les bandes sont réalisées avec des pas sensiblement égaux mais constituent des couches de renforts posées sur des diamètres différents engendrant un phénomène de battement au roulage.

### EXPOSE DE L'INVENTION

L'objectif principal de la présente invention est donc d'augmenter l'endurance d'un pneumatique dont les éléments de renforcement des couches de travail sont composés de monofilaments par l'adaptation de la géométrie des extrémités des monofilaments et sans générer de phénomène de battement.

Cet objectif est atteint par un pneumatique comprenant :
- une bande de roulement, destinée à entrer en contact avec un sol par l'intermédiaire d'une surface de roulement, et une armature de sommet, radialement intérieure à la bande de roulement et comprenant une armature de travail,
- l'armature de travail comprenant au moins deux couches de travail, comprenant chacune des éléments de renforcement, enrobés par un matériau élastomérique, parallèles entre eux et formant respectivement, avec une direction circonférentielle (XX') du pneumatique, un angle A au moins égal à 20° et au plus égal à 50° en valeur absolue et de signe opposé d'une couche à la suivante,
- chaque couche de travail comprenant au moins 100 et au plus 200 éléments de renforcement pour une largeur unitaire de couche de travail mesurée perpendiculairement aux monofilaments, égale à 10 cm,
- chaque élément de renforcement étant constitué par un fil métallique unitaire ou monofilament et comprenant une portion cylindrique prolongée de part et d'autre par deux portions d'extrémité,
- la portion cylindrique de chaque élément de renforcement ayant un axe (WW') et étant délimitée par une surface latérale (S_{L}), parallèle à l'axe (WW'), et deux surfaces de base (S_{B}), perpendiculaires à l'axe (WW'), chaque surface de base (S_{B}) ayant une plus petite dimension caractéristique (d) au moins égale à 0.20 mm et au plus égale à 0.60 mm,
- chaque portion d'extrémité comprenant une surface d'extrémité (S_{E}), ayant un point d'extrémité (E), positionné à la plus grande distance (d_{E}) par rapport à la surface de base (S_{B}),
- au moins 80% des éléments de renforcement de chaque couche de travail ayant des portions d'extrémité comprenant une surface d'extrémité (S_{E}) dont tous les points, positionnés à une distance (d_{ME}) par rapport au point d'extrémité (E) au plus égale à d/10, où d est la plus petite dimension caractéristique de la surface de base (S_{B}) de la portion cylindrique, sont positionnés à une distance (d_{MB}), mesurée par rapport au point d'extrémité (E), perpendiculairement par rapport à la surface de base (S_{B}), par rapport à la surface de base (S_{B}) au plus égale à d/25,
- les points d'extrémité (E) des monofilaments situées d'un même côté d'un plan circonférentiel médian appartiennent à un même plan circonférentiel.

Les monofilaments sont essentiellement des cylindres de section S, généralement circulaire mais possiblement ovoïde, de plus petite dimension d, terminés par deux portions d'extrémité. La portion cylindrique est délimitée par deux surfaces (S_{B}). Les portions d'extrémité sont délimitées par une surface de base, une surface latérale globalement cylindrique et tronquée et une surface d'extrémité S_{E} dont la forme dépend des moyens de coupes. Contrairement aux deux surfaces de base perpendiculaires à l'axe (WW'), les surfaces d'extrémités S_{E} ne sont pas obligatoirement planes ou perpendiculaires à l'axe (WW'). L'axe des monofilaments (WW') est sensiblement linéaire à la courbure du sommet du pneumatique près et aux déformations des monofilaments induites par la fabrication.

Un moyen usuel de fabrication des couches de travail est de fabriquer des nappes de monofilaments de grande longueur où la direction principale de la nappe est parallèle aux axes des monofilaments. Ces nappes sont appelées nappes droit fil. Ces nappes droit fil sont ensuite sectionnées selon un angle A' tel que après cuisson les monofilaments ait l'orientation désiré pour la couche de travail dans le pneumatique. Ces portions sont ensuite mises bout à bout pour former une nappe à angle qui une fois assemblée et cuite constitue dans le pneumatique une couche de travail. Selon cette méthode, les extrémités des monofilaments sont globalement alignés, les couches de travail sont de largeur sensiblement constante et les monofilaments reproduisent l'angle A' ainsi que leurs extrémités qui après fabrication du pneumatique forment des pointes aiguisées qui ont un effet de poinçonnement dans la gomme. La pose bout à bout des portions de nappes droit fil, peut engendrer des décalages des extrémités des monofilaments pouvant atteindre 7 mm.

En réalisant un méplat d'une longueur minimale au moins égale à un dixième de la plus petite dimension d de la section S, la pression de poinçonnement est diminuée et l'endurance du pneumatique augmentée.

Ce méplat peut être fabriqué à l'aide de plusieurs techniques de découpe des nappes droit fil selon un tracé ou une forme ajustés :
- Découpe par jet d'eau à très haute pression
- Découpe au laser
- Découpe par lame de coupe

L'alignement des extrémités, la largeur constante des couches de travail, aux variations de fabrication près, ont comme résultat dans le pneumatique que l'ensemble des extrémités des monofilaments d'une même couche et sur chacun des bords transversaux de la dite couche, appartient à un même plan circonférentiel, perpendiculaire à l'axe de rotation du pneumatique. Le plan circonférentiel médian appelé plan équatorial, est le plan circonférentiel passant par le milieu de la bande de roulement. Cette caractéristique géométrique permet de résoudre le problème des battements et de leurs conséquences tant en performance en bruit qu'en endurance.

Les variations de fabrication usuelles dans la fabrication des pneumatiques engendrent des différences de largeur de couches de travail comprises entre 2 et 7mm dans un même pneumatique.

Le principe de découpe par jet d'eau consiste à projeter de l'eau à une très grande vitesse, de l'ordre de 600 à 900 m/s sur la surface à découper. L'eau, par l'intermédiaire d'une pompe à très haute pression, pression de 2 000 à 4 000 bars, est dirigée vers un accumulateur puis propulsée à travers une buse vers la surface à découper, en l'occurrence la nappe de travail. Cette nappe est alors à l'état cru, avant l'étape classique de vulcanisation du pneumatique.

La découpe par jet d'eau pure peut être utilisée, mais il est préférable pour des raisons de rapidité d'exécution d'utiliser un procédé de découpe par jet d'eau contenant un abrasif.

A titre exemplatif mais non limitatif, un dispositif robotisé pilote la trajectoire du jet d'eau sur la nappe au moment de sa découpe de manière à obtenir sur chaque extrémité de monofilament la forme en méplat revendiquée.

La découpe laser est un procédé de fabrication qui consiste à découper la matière par un laser grâce à une grande quantité d'énergie générée et concentrée sur une très faible surface. Les lasers pouvant être utilisés pour effectuer cette découpe sont principalement des lasers à source CO2, à source YAG et à fibre.

A titre exemplatif mais non limitatif, un dispositif robotisé pilote la trajectoire du faisceau laser sur la nappe au moment de sa découpe de manière à obtenir sur chaque extrémité de monofilament la forme en méplat revendiquée.

La découpe par cisaillement entre 2 lames permet également d'obtenir les géométries revendiquées. Une des lames peut être un couteau tournant. Préférentiellement, le profil des lames est denté, ceci pour modifier localement l'angle de coupe des monofilaments contenus dans la nappe droit fil.

Il est avantageux qu'au moins 80% des éléments de renforcement de chaque couche de travail aient des portions d'extrémité comprenant une surface d'extrémité (S_{E}) dont tous les points, positionnés à une distance (d_{ME}) par rapport au point d'extrémité (E) au plus égale à d/10, où d est la plus petite dimension caractéristique de la surface de base (S_{B}) de la portion cylindrique, sont positionnés à une distance (d_{MB}), mesurée par rapport au point d'extrémité (E), perpendiculairement par rapport à la surface de base (S_{B}), au plus égale à d/35. Cela permet d'augmenter plus encore le méplat sur la surface Se et de diminuer le poinçonnement du mélange caoutchouteux par l'extrémité du monofilament.

Il est également préféré pour les mêmes raisons qu'au moins 80% des éléments de renforcement de chaque couche de travail aient des portions d'extrémité comprenant une surface d'extrémité (S_{E}) dont tous les points, positionnés à une distance (d_{ME}) par rapport au point d'extrémité (E) au plus égale à d/2, où d est la plus petite dimension caractéristique de la surface de base (S_{B}) de la portion cylindrique, sont positionnés à une distance (d_{MB}), par rapport au point d'extrémité (E), mesurée perpendiculairement par rapport à la surface de base (S_{B}), au plus égale à d/20.

Une solution préférée est que la section S, ou la surface de base (S_{B}) de la portion cylindrique de tout élément de renforcement est une surface circulaire.

Préférentiellement la section S ou la surface de base (S_{B}) de la portion cylindrique de tout élément de renforcement, est une surface circulaire ayant un diamètre (d) au moins égale à 0.30 mm et au plus égale à 0.37 mm, qui constituent un optimum pour l'équilibre des performances visées : le gain de masse et l'endurance au flambement des éléments de renforcement des couches de travail.

Une solution préférée est que chaque couche de travail comprenne des éléments de renforcement formant, avec une direction circonférentielle (XX') du pneumatique, un angle dont la valeur absolue est au moins égal à 22° et au plus égal à 35° qui constituent un optimum entre les performances de comportements et d'endurance du pneumatique. Les angles des éléments de renforcement des couches de travail sont mesurés au niveau du plan équatorial.

Il est avantageux que chaque couche de travail comprend au moins 120 et au plus 180 éléments de renforcement pour une largeur unitaire de couche de travail, mesurée perpendiculairement aux monofilaments, égale à 10 cm. Ceci permet de garantir une endurance améliorée des mélanges caoutchouteux travaillant en cisaillement entre les éléments de renforcement et l'endurance de ces derniers en traction et compression.

Les éléments de renforcement des couches de travail peuvent être rectilignes ou non. Ils peuvent être préformés, de forme sinusoïdale, zigzag, ondulée ou suivant une spirale. Les éléments de renforcement des couches de travail sont en acier, de préférence en acier au carbone tel que ceux utilisés dans les câbles type "steel cords" ; mais il est bien entendu possible d'utiliser d'autres aciers, par exemple des aciers inoxydables, ou d'autres alliages.

Lorsqu'un acier au carbone est utilisé, sa teneur en carbone (% en poids d'acier) est de préférence comprise dans un domaine de 0,8% à 1,2%. L'invention s'applique en particulier à des aciers du type steel cord à très haute résistance (dit "SHT" pour " Super High Tensile "), ultra-haute résistance (dit "UHT" pour "Ultra High Tensile " ou "MT" pour "Mega Tensile "). Les renforts en acier au carbone ont alors une résistance à la rupture en traction (Rm) qui est de préférence supérieure à 3000 MPa, plus préférentiellement supérieure à 3500 MPa. Leur allongement total à la rupture (At), somme de l'allongement élastique et de l'allongement plastique, est de préférence supérieur à 2,0%.

Pour ce qui concerne les renforts en acier, les mesures, de résistance à la rupture notée Rm (en MPa) et d'allongement à la rupture noté At (allongement total en %) sont effectuées en traction selon la norme ISO 6892 de 1984.

L'acier utilisé, qu'il s'agisse en particulier d'un acier au carbone ou d'un acier inoxydable, peut être lui-même revêtu d'une couche métallique améliorant par exemple les propriétés de mise en oeuvre du monofilament d'acier, ou les propriétés d'usage du renfort et/ou du pneumatique eux-mêmes, telles que les propriétés d'adhésion, de résistance à la corrosion ou encore de résistance au vieillissement. Selon un mode de réalisation préférentiel, l'acier utilisé est recouvert d'une couche de laiton (alliage Zn-Cu) ou de zinc ; on rappelle que lors du procédé de fabrication des fils, le revêtement de laiton ou de zinc facilite le tréfilage du fil, ainsi que le collage du fil avec le caoutchouc. Mais les renforts pourraient être recouverts d'une fine couche métallique autre que du laiton ou du zinc, ayant par exemple pour fonction d'améliorer la résistance à la corrosion de ces fils et/ou leur adhésion au caoutchouc, par exemple une fine couche de Co, Ni, Al, d'un alliage de deux ou plus des composés Cu, Zn, Al, Ni, Co, Sn.

### BREVE DESCRIPTION DES DESSINS

Les caractéristiques et autres avantages de l'invention seront mieux compris à l'aide des figures 1 à 7, les dites figures n'étant pas représentées à l'échelle mais de façon simplifiée, afin de faciliter la compréhension de l'invention :
- La figure 1 est une vue en perspective représentant une partie de pneumatique selon l'invention, en particulier son architecture et sa bande de roulement.
- La figure 2 représente une couche de travail sectionnée, un monofilament issu de l'opération et un monofilament selon l'invention.

### DESCRIPTION DETAILLEE DES DESSINS

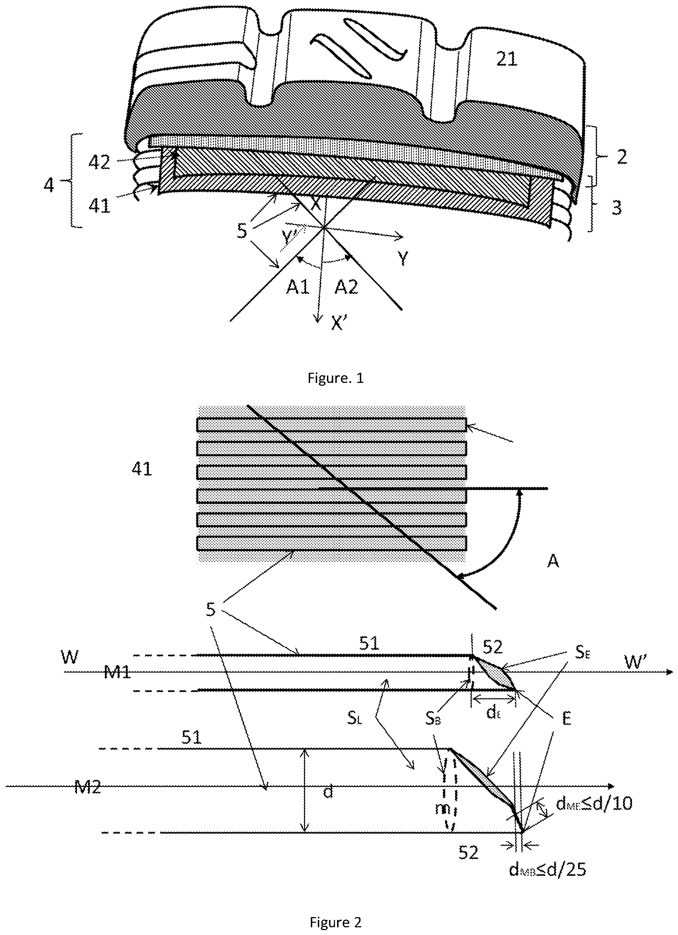

La figure 1 représente une vue en perspective représentant une partie du sommet d'un pneumatique. Le pneumatique comporte une bande de roulement 2 destinée à entrer en contact avec un sol par l'intermédiaire d'une surface de roulement 21. Le pneumatique comprend en outre une armature de sommet 3 comprenant une armature de travail 4. L'armature de travail comprend deux couches de travail 41 et 42 comprenant chacune des éléments de renforcement parallèles (5) entre eux, formant respectivement avec une direction circonférentielle (XX') du pneumatique, un angle orienté au moins égal à 20° et au plus égal à 50° en valeur absolue et de signe opposé d'une couche à la suivante.

La figure 2 représente schématiquement une couche de travail coupée lors de la fabrication selon un angle A qui se retrouve au niveau de la surface d'extrémité du monofilament M1 provoquant dans le pneumatique un poinçonnement des mélanges caoutchouteux et leur fissuration. La figure illustre la portion cylindrique 51 et une des portions d'extrémité 52 du monofilament, l'axe du monofilament WW', la surface latérale S_{L}, une surface de base S_{B}, une surface d'extrémité S_{E}, le point d'extrémité E à la plus grande distance d_{E} de la surface de base S_{B}. Le monofilament M2 selon l'invention est découpé avec la couche de travail selon un tracé tel que les points de la surface S_{E} éloignés d'au plus d/10, un dixième de la plus petite dimension de la section S du monofilament, est axialement éloigné d'au plus d/25, un vingt-cinquième de la plus petite dimension D de la section S, créant un méplat m diminuant selon nos calculs la pression de poinçonnement de l'extrémité du monofilament sur les mélanges caoutchouteux du pneumatique d'au moins un facteur 10.

## Revendications

1. Pneumatique comprenant :
• une bande de roulement (2), destinée à entrer en contact avec un sol par l'intermédiaire d'une surface de roulement (21), et une armature de sommet (3), radialement intérieure à la bande de roulement (2) et comprenant une armature de travail (4),
• l'armature de travail (4) comprenant au moins deux couches de travail (41, 42), comprenant chacune des éléments de renforcement (5), enrobés par un matériau élastomérique, parallèles entre eux et formant respectivement, avec une direction circonférentielle (XX') du pneumatique, un angle A au moins égal à 20° et au plus égal à 50° en valeur absolue et de signe opposé d'une couche à la suivante,
• chaque couche de travail (41, 42) comprenant au moins 100 et au plus 200 éléments de renforcement (5) pour une largeur unitaire de couche de travail, mesurée perpendiculairement aux monofilaments, égale à 10 cm,
• chaque élément de renforcement (5) étant constitué par un fil métallique unitaire ou monofilament et comprenant une portion cylindrique (51) prolongée de part et d'autre par deux portions d'extrémité (52, 53),
• la portion cylindrique (51) de chaque élément de renforcement (5) ayant un axe (WW') et étant délimitée par une surface latérale (S_{L}), parallèle à l'axe (WW'), et deux surfaces de base (S_{B}), perpendiculaires à l'axe (WW'), chaque surface de base (S_{B}) ayant une plus petite dimension caractéristique (d) au moins égale à 0.20 mm et au plus égale à 0.60 mm,
• chaque portion d'extrémité (52, 53) comprenant une surface d'extrémité (S_{E}), non plane et non perpendiculaire à l'axe (WW'), ayant un point d'extrémité (E), positionné à la plus grande distance (d_{E}) par rapport à la surface de base (S_{B}),
**caractérisé en ce qu'**au moins 80% des éléments de renforcement (5) de chaque couche de travail (41, 42) ont des portions d'extrémité (52, 53) comprenant une surface d'extrémité (S_{E}) dont tous les points (M), positionnés à une distance (d_{ME}) par rapport au point d'extrémité (E) au plus égale à d/10, où d est la plus petite dimension caractéristique de la surface de base (S_{B}) de la portion cylindrique (51), sont positionnés à une distance (d_{MB}), mesurée par rapport au point d'extrémité (E), perpendiculairement par rapport à la surface de base (S_{B}), au plus égale à d/25,
**et en ce que** les points d'extrémité (E) des monofilaments situés d'un même côté d'un plan circonférentiel médian appartiennent à un même plan circonférentiel.

2. Pneumatique selon la revendication 1 **dans lequel** au moins 80% des éléments de renforcement (5) de chaque couche de travail (41, 42) ont des portions d'extrémité (52, 53) comprenant une surface d'extrémité (S_{E}) dont tous les points (M), positionnés à une distance (d_{ME}) par rapport au point d'extrémité (E) au plus égale à d/10, où d est la plus petite dimension caractéristique de la surface de base (S_{B}) de la portion cylindrique (51), sont positionnés à une distance (d_{MB}) mesurée par rapport au point d'extrémité (E), perpendiculairement par rapport à la surface de base (S_{B}), au plus égale à d/35.

3. Pneumatique selon l'une des revendications 1 ou 2 **dans lequel** au moins 80% des éléments de renforcement (5) de chaque couche de travail (41, 42) ont des portions d'extrémité (52, 53) comprenant une surface d'extrémité (S_{E}) dont tous les points (M), positionnés à une distance (d_{ME}) par rapport au point d'extrémité (E) au plus égale à d/2, où d est la plus petite dimension caractéristique de la surface de base (S_{B}) de la portion cylindrique (51), sont positionnés à une distance (d_{MB}), par rapport au point d'extrémité (E), mesurée perpendiculairement par rapport à la surface de base (S_{B}), au plus égale à d/20.

4. Pneumatique selon l'une quelconque des revendications 1 à 3 **dans lequel** la surface de base (S_{B}) de la portion cylindrique (51) de tout élément de renforcement (5) est une surface circulaire.

5. Pneumatique selon l'une quelconque des revendications 1 à 4 **dans lequel** la surface de base (S_{B}) de la portion cylindrique (51) de tout élément de renforcement (5) est une surface circulaire ayant un diamètre (d) au moins égale à 0.30 mm et au plus égale à 0.37 mm.

6. Pneumatique selon l'une quelconque des revendications 1 à 5 **dans lequel** chaque couche de travail (41, 42) comprend des éléments de renforcement (5) formant, avec la direction circonférentielle (XX') du pneumatique, un angle A au moins égal à 22° et au plus égal à 35° en valeur absolue.

7. Pneumatique selon l'une quelconque des revendications 1 à 6 **dans lequel** chaque couche de travail (41, 42) comprend au moins 120 et au plus 180 éléments de renforcement (5) pour une largeur unitaire de couche de travail, mesurée perpendiculairement aux monofilaments, égale à 10 cm,

8. Pneumatique selon l'une quelconque des revendications 1 à 7 **dans lequel** les éléments de renforcement (5) des couches de travail (41, 42) sont en acier, de préférence en acier au carbone.

## Patentansprüche

1. Luftreifen, der Folgendes umfasst:
- eine Laufbahn (2), die dazu bestimmt ist, mit einem Untergrund über eine Laufoberfläche (21) in Kontakt zu gelangen, und eine obere Mantelfläche (3), die sich radial innerhalb der Laufbahn (2) befindet und eine Arbeitsmantelfläche (4) aufweist,
- wobei die Arbeitsmantelfläche (4) wenigstens zwei Arbeitsschichten (41, 42) umfasst, die jeweils Verstärkungselemente (5) enthalten, die mit einem elastomeren Material umhüllt sind, zueinander parallel sind und mit einer Umfangsrichtung (XX') des Luftreifens jeweils einen Winkel A bilden, der dem Absolutwert nach wenigstens 20° und höchstens 50° ist und ein zu jenem der folgenden Schicht entgegengesetztes Vorzeichen besitzt,
- wobei jede Arbeitsschicht (41, 42) wenigstens 100 und höchstens 200 Verstärkungselemente (5) für eine einheitliche Arbeitsschichtbreite, die senkrecht zu den Monofilamenten gemessen wird und gleich 10 cm ist, enthält,
- wobei jedes Verstärkungselement (5) durch einen einzigen Metalldraht oder ein Monofilament gebildet ist und einen zylindrischen Abschnitt (51) aufweist, der beiderseits durch zwei Endabschnitte (52, 53) verlängert ist,
- wobei der zylindrische Abschnitt (51) jedes Verstärkungselements (5) eine Achse (WW') besitzt und durch eine seitliche Oberfläche (S_{L}) parallel zu der Achse (WW') und durch zwei Basisoberflächen (S_{B}) senkrecht zu der Achse (WW') begrenzt ist, wobei jede Basisoberfläche (S_{B}) eine kleinere charakteristische Abmessung (d) besitzt, die wenigstens 0,20 mm und höchstens 0,60 mm ist,
- wobei jeder Endabschnitt (52, 53) eine Endoberfläche (S_{E}) aufweist, die nicht eben ist und zu der Achse (WW') nicht senkrecht ist und einen Extrempunkt (E) besitzt, der in Bezug auf die Basisoberfläche (S_{B}) im größten Abstand (d_{E}) positioniert ist,
**dadurch gekennzeichnet, dass** wenigstens 80 % der Verstärkungselemente (5) jeder Arbeitsschicht (41, 42) Endabschnitte (52, 53) besitzen, die eine Endoberfläche (S_{E}) aufweisen, wovon alle Punkte (M), die in Bezug auf den Extrempunkt (E) in einem Abstand (d_{ME}), der höchstens gleich d/10 beträgt, wobei d die kleinste charakteristische Abmessung der Basisoberfläche (S_{B}) des zylindrischen Abschnitts (51) ist, positioniert sind, in einem Abstand (d_{MB}), der in Bezug auf den Extrempunkt (E) senkrecht in Bezug auf die Basisoberfläche (S_{B}) gemessen wird und der höchstens gleich d/25 ist, positioniert sind,
und dass die Extrempunkte (E) der Monofilamente, die sich auf derselben Seite einer mittleren Umfangsebene befinden, zu derselben Umfangsebene gehören.

2. Luftreifen nach Anspruch 1, wobei wenigstens 80 % der Verstärkungselemente (5) jeder Arbeitsschicht (41, 42) Endabschnitte (52, 53) besitzen, die eine Endoberfläche (S_{E}) aufweisen, wovon sämtliche Punkte (M), die in Bezug auf den Extrempunkt (E) in einem Abstand (d_{ME}), der höchstens gleich d/10 ist, wobei d die kleinste charakteristische Abmessung der Basisoberfläche (S_{B}) des zylindrischen Abschnitts (51) ist, positioniert sind, in einem Abstand (d_{MB}), der in Bezug auf den Extrempunkt (E) senkrecht in Bezug auf die Basisoberfläche (S_{B}) gemessen wird und der höchstens gleich d/35 ist, positioniert sind.

3. Luftreifen nach einem der Ansprüche 1 oder 2, wobei wenigstens 80 % der Verstärkungselemente (5) jeder Arbeitsschicht (41, 42) Endabschnitte (52, 53) besitzen, die eine Endoberfläche (S_{E}) aufweisen, wovon sämtliche Punkte (M), die in Bezug auf den Extrempunkt (E) in einem Abstand (d_{ME}), der höchstens gleich d/2 ist, wobei d die kleinste charakteristische Abmessung der Basisoberfläche (S_{B}) des zylindrischen Abschnitts (51) ist, positioniert sind, in einem Abstand (d_{MB}), der in Bezug auf den Extrempunkt (E) senkrecht zu der Basisoberfläche (S_{B}) gemessen wird und der höchstens gleich d/20 ist, positioniert sind.

4. Luftreifen nach einem der Ansprüche 1 bis 3, wobei die Basisoberfläche (S_{B}) des zylindrischen Abschnitts (51) jedes Verstärkungselements (5) eine kreisförmige Oberfläche ist.

5. Luftreifen nach einem der Ansprüche 1 bis 4, wobei die Basisoberfläche (S_{B}) des zylindrischen Abschnitts (51) jedes Verstärkungselements (5) eine kreisförmige Oberfläche ist, die einen Durchmesser (d) besitzt, der wenigstens gleich 0,30 mm und höchstens gleich 0,37 mm ist.

6. Luftreifen nach einem der Ansprüche 1 bis 5, wobei jede Arbeitsschicht (41, 42) Verstärkungselemente (5) aufweist, die mit der Umfangsrichtung (XX') des Luftreifens einen Winkel A bilden, der dem Absolutwert nach wenigstens 22° und höchstens 35° ist.

7. Luftreifen nach einem der Ansprüche 1 bis 6, wobei jede Arbeitsschicht (41, 42) wenigstens 120 und höchstens 180 Verstärkungselemente (5) für eine einheitliche Arbeitsschichtbreite von 10 cm, die senkrecht zu den Monofilamenten gemessen wird, umfasst.

8. Luftreifen nach einem der Ansprüche 1 bis 7, wobei die Verstärkungselemente (5) der Arbeitsschichten (41, 42) aus Stahl, vorzugsweise aus Karbonstahl, sind.

## Claims

1. Tyre comprising:
• a tread (2), intended to come into contact with the ground via a tread surface (21), and a crown reinforcement (3), radially on the inside of the tread (2), and comprising a working reinforcement (4),
• the working reinforcement (4) comprising at least two working layers (41, 42), each comprising reinforcing elements (5) which are coated in an elastomeric material, mutually parallel and respectively form, with a circumferential direction (XX') of the tyre, an angle A at least equal to 20° and at most equal to 50°, in terms of absolute value, and of opposite sign from one layer to the next,
• each working layer (41, 42) comprising at least 100 and at most 200 reinforcing elements (5) per 10-cm unit width of working layer measured perpendicular to the monofilaments,
• each reinforcing element (5) being made up of an individual metal thread or monofilament and comprising a cylindrical portion (51) extended on each side by two end portions (52, 53),
• the cylindrical portion (51) of each reinforcing element (5) having an axis (WW) and being delimited by a lateral surface (S_{L}), parallel to the axis (WW), and two base surfaces (S_{B}), perpendicular to the axis (WW), each base surface (S_{B}) having a smallest characteristic dimension (d) at least equal to 0.20 mm and at most equal to 0.60 mm.
• each end portion (52, 53) comprising an end surface (S_{E}), that is not planar and not perpendicular to the axis (WW), having an endpoint (E), positioned at the greatest possible distance (d_{E}), from the base surface (S_{B}),
**characterized in that** at least 80% of the reinforcing elements (5) of each working layer (41, 42) have end portions (52, 53) comprising an end surface (S_{E}) of which all points (M) positioned at a distance (d_{ME}) from the endpoint (E) that is at most equal to d/10, where d is the smallest characteristic dimension of the base surface (S_{B}) of the cylindrical portion (51), are positioned at a distance (d_{MB}) from the endpoint (E), measured perpendicular to the base surface (S_{B}), at most equal to d/25.
**and in that** the monofilament endpoints (E) which are situated on the one same side of a circumferential median plane belong to the one same circumferential plane.

2. Tyre according to Claim 1, **wherein** at least 80% of the reinforcing elements (5) of each working layer (41, 42) have end portions (52, 53) comprising an end surface (S_{E}) of which all points (M) positioned at a distance (d_{ME}) from the endpoint (E) that is at most equal to d/10, where d is the smallest characteristic dimension of the base surface (S_{B}) of the cylindrical portion (51), are positioned at a distance (d_{MB}) from the endpoint (E), measured perpendicular to the base surface (S_{B}), at most equal to d/35.

3. Tyre according to one of Claims 1 and 2, **wherein** at least 80% of the reinforcing elements (5) of each working layer (41, 42) have end portions (52, 53) comprising an end surface (S_{E}) of which all points (M) positioned at a distance (d_{ME}) from the endpoint (E) that is at most equal to d/2, where d is the smallest characteristic dimension of the base surface (S_{B}) of the cylindrical portion (51), are positioned at a distance (d_{MB}) from the endpoint (E), measured perpendicular to the base surface (S_{B}), at most equal to d/20.

4. Tyre according to any one of Claims 1 to 3, **wherein** the base surface (S_{B}) of the cylindrical portion (51) of any reinforcing element (5) is a circular surface.

5. Tyre according to any one of Claims 1 to 4, **wherein** the base surface (S_{B}) of the cylindrical portion (51) of any reinforcing element (5) is a circular surface having a diameter (d) at least equal to 0.30 mm and at most equal to 0.37 mm.

6. Tyre according to any one of Claims 1 to 5, **wherein** each working layer (41, 42) comprises reinforcing elements (5) which form, with the circumferential direction (XX') of the tyre, an angle A at least equal to 22° and at most equal to 35° in terms of absolute value.

7. Tyre according to any one of Claims 1 to 6, **wherein** each working layer (41, 42) comprises at least 120 and at most 180 reinforcing elements (5) per 10-cm unit width of working layer, measured perpendicular to the monofilaments.

8. Tyre according to any one of Claims 1 to 7, **wherein** the reinforcing elements (5) of the working layers (41, 42) are made of steel, preferably carbon steel.
